# EUROPÄISCHE PATENTSCHRIFT

(11) **EP 0 913 908 B1**
(45) Veröffentlichungstag und Bekanntmachung des Hinweises auf die Patenterteilung: **25.01.2006**
(21) Anmeldenummer: 98120322.7
(22) Anmeldetag: 27.10.1998
(51) Int. Cl.: H02J 17/00, B64B 1/00

(54) **Flugkörper zum im wesentlichen ortsfesten Aufenthalt in Höhen bis in die Stratosphäre**
Flying body maintained in an essentially fixed position at altitudes as high as the stratosphere
Corps volant maintenu dans une position essentiellement fixe à des altitudes jusqu'à la stratosphère

(30) Priorität: 31.10.1997 DE 19748262
(43) Veröffentlichungstag der Anmeldung: 06.05.1999
(73) Patentinhaber: Fraunhofer-Gesellschaft zur Förderung der angewandten Forschung e.V., 80686 München (DE)
(72) Erfinder: Gerhäuser, Heinz, 91344 Waischenfeld (DE)
(74) Vertreter: Schoppe, Fritz

(56) Entgegenhaltungen:
- EP-A- 0 385 921
- WO-A-97/33790
- FR-A- 2 709 728
- GB-A- 2 082 995

## Beschreibung

Die vorliegende Erfindung betrifft einen neuartigen Flugkörper, der zur Verwirklichung eines neuen Konzepts zur Telekommunikation und zur Erfassung und Übermittlung von physikalischen und chemischen Meßwerten sowie von Bildinformation geeignet ist.

Insbesondere betrifft die vorliegende Erfindung einen Flugkörper zum im wesentlichen ortsfesten Aufenthalt bis in die Stratosphäre, der, mit mindestens einer Empfangs- und Sendestation ausgestattet, als mobile Informationsübertragungsstation und mit weiterhin einer Versorgungsstation als Informationsübertragungssystem ausgestaltet sein kann. Diese sind geeignet, Informationen, beispielsweise Nachrichten und Fernsehsendungen bei niedriger Sendeleistung und mit großer Reichweite zu übertragen.

Die Erfindung betrifft weiterhin eine mobile Datenerfassungs- und -übertragungsstation, die mit geeigneten Sensoren zur Erfassung von physikalischen und/oder chemischen Meßwerten sowie von Bildinformationen bestückt ist, wie beispielsweise eine mobile Wetterdatenstation und ein Wetterinformationssystem, durch die Wetterdaten zentral erfaßt und übertragen werden können.

Bei den bekannten Techniken zur Rundfunk- und/oder Fernsehübertragung werden einerseits mit geeigneten Antennen bestückte, ca. 50 bis einige hundert Meter hohe Sendemasten verwendet, die die zu übertragenden Rundfunk- und/oder Fernsehprogramme aussenden. Mit derartigen Sendern sind durch die begrenzte Antennenhöhe und durch entstehende Interferenzen nur begrenzte Reichweiten möglich. Andererseits treten in bergigen Gegenden Probleme auf, daß Tallagen unzureichend erreicht werden, wodurch die Verwendung von Umsetzern erforderlich wird.

Des weiteren werden zur Rundfunk- und Fernsehübertragung geostationäre Satelliten eingesetzt, die die Erde in einem Abstand von ca. 35 700 km umkreisen. Diese haben zwar nicht das Problem der begrenzten Reichweite, dafür sind für die Übertragung hohe Sendeleistungen erforderlich. Bei Satelliten ist die aufbringbare Sendeleistung durch das begrenzte zulässige Startgewicht bei einer vorgegebenen möglichst langen Lebensdauer des Satelliten begrenzt. Folglich entstehen Probleme, wenn eine erforderliche Mindest-Sendeleistung erzielt werden soll. Entsprechend sind besonders empfindliche Empfangsvorrichtungen erforderlich.

Ein weiteres Problem besteht darin, daß die bekannten Satelliten über eine sehr zuverlässige, haltbare und sichere Elektronik verfügen müssen, so daß sie während ihrer gesamten Lebensdauer, die typischerweise 10 bis 15 Jahre beträgt, ohne Ausfall und Wartung betrieben werden können. Entsprechend ist es notwendig, eine gewisse Systemredundanz einzuführen, so daß bei Ausfall einer Komponente eine weitere Komponente bereitsteht, die die Funktion der ausgefallenen Komponente übernehmen kann. Entsprechend sind die heutzutage verwendeten Satelliten sehr teuer.

Typische verwendete Satelliten weisen zur Energieversorgung Solarzellen auf, die die nötige Energie liefern und überschüssige Energie an Speichervorrichtungen liefern, so daß auch beispielsweise bei Dunkelheit ausreichend viel Energie zur Verfügung steht.

Weitere Probleme stellen die aufwendige und kostenintensive Beförderung von Satelliten in ihre Arbeitsposition dar, die ihren spontanen Einsatz erschweren. Beispielsweise können Satelliten nicht zu beliebigen Zeitpunkten gestartet werden, sondern es muß das geeignete Zeitfenster für ihren Start verwendet werden. Ist das geeignete Zeitfenster verpaßt worden, so muß man meistens mehrere Monate warten, bis der Satellit wieder gestartet werden kann.

Aus diesen Gründen und weil Satelliten üblicherweise nicht wieder auf der Erde landen, ist eine Wartung oder Reparatur mit anschließender Wiederverwertung bei vertretbaren Mitteln nicht möglich.

Da die bekannten Satelliten so teuer und aufwendig sind, werden sie nicht auf Vorrat gefertigt sondern meistens für einen speziellen Anwendungszweck hergestellt. Lediglich einzelne Module, die in allen Satelliten verwendet werden, lassen sich in Massenfertigung und auf Vorrat herstellen. Entsprechend haben Satelliten eine Vorlaufzeit von 1 bis 2 Jahren, bevor sie nach Auftrag verfügbar sind. Des weiteren steigen, da Satelliten nicht in Massenproduktion herstellbar sind, dadurch die Kosten weiter an.

Satelliten können - bei entsprechend kürzerer Umlaufzeit - auch in niedrigeren Abständen von der Erdoberfläche betrieben werden. In diesem Fall benötigt man ein Netzwerk von Satelliten, so daß eine bestimmte Empfangsemrichtung immer in Reichweite eines beliebigen Satelliten liegt. Diese Empfangseinnchtung folgt dann typischerweise der Satellitenbewegung.

Aus der EP-A-0385921 ist ein Luftfahrzeug bekannt, das eine rotierende Verankerung an der Oberseite desselben besitzt, an der über Verbindungseinrichtungen unbemannte Flugzeuge angebracht sind, die um die rotierende Verankerung kreisen, um das Luftfahrzeug auf einer vorbestimmten Höhe zu halten und dasselbe zu navigieren. Das Luftfahrzeug kann über Mikrowellen oder über Laser mit Energie von einer Bodenstation versorgt werden.

Aus der GB-A-2082995 ist ein Flugkörper bekannt, der sowohl als Kommunikationsgerät als auch als Datenerfassungsgerät Anwendung finden kann. Als mögliche Auftriebsmechanismen sind ein aerostatischer Auftrieb und ein aerodynamischer Auftrieb genannt, wobei der Flugkörper ferner Antriebseinrichtungen aufweist, die es ermöglichen, den Flugkörper an einer vorbestimmten Position zu halten, beispielsweise einen Propeller oder einen Rückstoßantrieb.

Die FR-A-2709728 offenbart einen Ballon und somit einen Flugkörper mit aerostatischem Auftrieb. Der Zustand des Füllgases des Ballons kann durch eine Energieversorgung über einen Hochfrequenzsender vom Boden aus eingestellt werden.

Aus der WO 9733790 A ist ein Flugkörper, der zur Positionierung in der Stratosphäre ausgelegt ist, bekannt. Der Flugkörpern umfaßt luftschiffartige Einrichtungen zur Ausnutzung eines aerostatischen Auftriebs an zwei Seiten desselben. Ferner sind Ionenantriebe an einem Ende jeder luftschiffartigen Einrichtung vorgesehen, um den Flugkörper stationär zu halten und denselben zu navigieren.

Der vorliegenden Erfindung liegt somit die Aufgabe zugrunde, einen kostengünstigen und einfach handhabbaren Flugkörper zu entwickeln, von dem aus Informationen bei gleichen Empfangsbedingungen mit geringerer Sendeleistung als bei herkömmlichen Satelliten übertragen werden kann und der kurzfristig, d. h. innerhalb von ein bis zwei Tagen, in seine Arbeitsposition gebracht werden kann.

Diese Aufgabe wird durch einen Flugkörper nach Anspruch 1 gelöst.

Die bevorzugten Ausführungsformen sind Gegenstand der abhängigen Ansprüche.

Die vorliegende Erfindung betrifft somit einen Flugkörper zum im wesentlichen ortsfesten Aufenthalt bis in die Stratosphäre, mit Einrichtungen, die geeignet sind, den Flugkörper unter Ausnutzung des Auftriebs auf einer vorgegebenen Höhe zu halten, Einrichtungen, die geeignet sind, den Flugkörper auf einer vorgegebenen Längen- und Breitenposition zu halten, und Mitteln, um den Flugkörper von einer Versorgungsstation aus drahtlos mit Energie zu versorgen.

Dabei soll der Flugkörper im wesentlichen ortsfest positioniert sein. "Im wesentlichen" ortsfest heißt dabei, "ortsfest, bis auf für die jeweilige Anwendung unerhebliche Schwankungen oder Abweichungen". Der Flugkörper umfaßt daher Einrichtungen, die geeignet sind, den Flugkörper unter Ausnutzung des Auftriebs auf einer vorgegebenen Höhe zu halten. Diese können beispielsweise durch Auftriebkörper, insbesondere Ballons, realisiert sein. Beispielsweise kann für eine Abwärtsbewegung der Auftrieb des Ballons reduziert und für eine Aufwärtsbewegung erhöht werden. Bei einem gasgefüllten Ballon kann dies durch Ablassen von Gas bzw. durch Einfüllen von Gas aus einer Vorratsflasche geschehen. Ferner umfaßt der erfindungsgemäße Flugkörper Einrichtungen, die geeignet sind, den Flugkörper auf einer vorgegebenen Längen- und Breitenposition zu halten. Darüber hinaus soll der Flugkörper nur während seines Betriebszustands ortsfest positioniert sein.

Das heißt, zunächst wird der Flugkörper von der Versorgungsstation aus, die sich üblicherweise auf der Erde befindet, zu seiner vorbestimmten Position gebracht. Dazu ist er vorzugsweise mit einer zusätzlichen Energievorratseinrichtung, beispielsweise einem Brennstofftank ausgestattet, die die dazu notwendige Energie liefert. Sobald er die vorbestimmte Höhe erreicht hat, was beispielsweise mit Hilfe eines Höhenmessers oder durch ein satellitenunterstütztes Ortungssystem bestimmt werden kann, wird mindestens ein Auftriebskörper entfaltet, der vorgesehen ist, um den Flugkörper auf einer vorbestimmten Höhe zu halten.

Diese Maßnahme ist notwendig, um den angetriebenen Flugkörper in einer bestimmten Höhe über einem bestimmten Punkt der Erdoberfläche gegen einwirkende Kräfte zu halten.

Die Versorgungsstation, von der aus der Flugkörper gestartet wird, kann sich dabei je nach Anwendungsfall auch auf dem Meer oder in der Luft befinden.

Der Flugkörper bezieht nun die Energie, die er braucht, um die vorbestimmte Position zu halten, direkt von der Versorgungsstation über drahtlose Energieübertragungstechniken, bevorzugt unter Ausnutzung elektromagnetischer Wellen. Als Beispiel dient eine an der Versorgungsstation angebrachte Laserlichtquelle. In diesem Fall weist der Flugkörper eine photoelektrische Umwandlungseinrichtung, beispielsweise ein Solarpanel auf. Alternativ können an die Versorgungsstation eine HF-Sendeeinrichtung, beispielsweise ein Parabolspiegel, und Einrichtungen zum Einkoppeln von HF-Leistung aus der Sendeeinrichtung angebracht sein, und der Flugkörper enthält eine HF-Empfangseinrichtung zum Empfangen der übertragenen Leistung.

Wenn eine Laserlichtquelle verwendet wird, so muß diese entsprechend ausgewählt werden, daß sie ausreichende Leistung an den Flugkörper überträgt und die von ihr emittierte Laserstrahlung in den zwischen Flugkörper und Versorgungsstation liegenden Luftschichten wenig absorbiert wird. Die photoelektrische Umwandlungseinrichtung ist vorzugsweise auf den Empfang der übertragenen Laserstrahlung optimiert.

Der erfindungsgemäße Flugkörper umfaßt ferner Einrichtungen, um den Flugkörper auf einer vorgegebenen Längen- und Breitenposition zu halten. Diese umfassen vorzugsweise eine Vorrichtung zum Bestimmen der aktuellen Längen- und Breitenposition sowie eine Vorrichtung zum Korrigieren der aktuellen Längen- und Breitenposition. Dabei umfaßt die Vorrichtung zum Bestimmen der aktuellen Längen- und Breitenposition vorzugsweise ein satellitenunterstütztes Ortungssystem, beispielsweise ein GPS-System. Ferner kann der erfindungsgemäße Flugkörper eine Vorrichtung zur Feinbestimmung der aktuellen Längen- und Breitenposition umfassen, die vorzugsweise derart gestaltet ist, daß sie bestimmt, ob der Flugkörper in seiner aktuellen Position die maximal übertragbare Energie erhält und, falls dies nicht der Fall ist, bestimmt, an welcher Stelle der Flugkörper die maximal übertragbare Energie erhalten würde, so daß die korrekte Position leicht ermittelt werden kann. Unter Verwendung einer Vorrichtung zum Korrigieren der aktuellen Längen- und Breitenposition, die beispielsweise einen in der Raumfahrt üblichen Rückstoßantrieb, z.B. Ionenstrahlantrieb, oder aber auch, bei niedrigeren Höhen, einen aerodynamischen Antrieb, z.B. einen Propellerantrieb umfaßt, kann der Flugkörper dann die vorgegebene Position einnehmen.

Der erfindungsgemäße Flugkörper kann auch als Ring ausgebildet sein und eine Drehbewegung um die zentrale Ringachse ausführen. Dadurch wird seine Lage weiter stabilisiert.

Der erfindungsgemäße Flugkörper kann durch eine, beispielsweise an der Versorgungsstation angebrachte Fernsteuerung gesteuert werden, so daß er seine Arbeitsposition einnimmt oder verläßt. Dabei kann er mit Hilfe einer Hilfsvorrichtung, beispielsweise einem Trägerflugzeug, in die gewünschte Position gebracht werden. Der Abstieg kann dann mit Hilfe eines Fallschirms erfolgen.

Zusätzlich oder auch alternativ kann der Flugkörper aber auch noch einen Mechanismus zur autonomen Selbststeuerung umfassen. Dieser steuert dann selbsttätig den Flugkörper, bis er die Arbeitsposition erreicht hat und sich stabilisiert hat, und bewirkt autonom die sichere Landung des Flugkörpers an einem vorgegebenen Ort.

Die Kombination einer Fernsteuerung mit einem Mechanismus zur autonomen Selbststeuerung hat dabei den Vorteil, daß selbst bei einer externen Störung oder Beschädigung der Flugkörper, wenn er beispielsweise keinen Kontakt mit der Fernsteuerung mehr hat, sicher an einen vorgegebenen Ort zurückkehren kann.

Eine erfindungsgemäße mobile Informationsübertragungsstation umfaßt einen Flugkörper wie vorstehend beschrieben und darüber hinaus mindestens eine Sende- und mindestens eine Empfangseinrichtung.

Eine derartige mobile Informationsübertragungsstation hat den Vorteil, daß sie im Vergleich zu den derzeit verwendeten Satelliten preisgünstig ist und daß sie Information mit geringen Sendeleistungen übertragen kann. Dadurch muß der auf dem Flugkörper angebrachte Sender über die Sendeantenne keine hohen Leistungen (< 1 kW) abstrahlen, und auch die von den einzelnen Empfängern, beispielsweise am Boden oder in einem Satellit, verwendeten Empfangseinrichtungen müssen nicht hochempfindlich sein. Dadurch können die allgemein verwendeten Informationsübertragungssysteme weiter verbilligt werden. Desweiteren ist solch eine Informationsübertragungsstation recht mobil. Je nach Bedarf, beispielsweise bei für weite Bevölkerungskreise hochinteressanten Ereignissen (Olympische Spiele usw.) können derartige Informationsübertragungsstationen lokal schnell und ohne großen Aufwand installiert werden und nach Ende der Veranstaltung wieder abgebaut werden. Der Abbau kann beispielsweise erfolgen, indem der Flugkörper analog der Landung eines Segelflugzeugs zur Erde zurückkehrt.

Befehle oder Zusatzinformationen an die Informationsübertragungsstation können dabei wie bei den üblichen Satellitensystemen übermittelt werden.

Da die erfindungsgemäßen Flugkörper leicht handhabbar sind, ist es zusätzlich möglich, sie kurzfristig auf die Erde zurückzuholen, um sie zu warten, reparieren oder um Verbesserungen vorzunehmen. Entsprechend müssen die zur Herstellung des Flugkörpers, der Informationsübertragungsstation oder der Datenerfassungs- und -übertragungsstation verwendeten Komponenten nicht den strengen Anforderungen der Weltraumelektronik genügen, sondern die Anforderungen an die Industrieelektronik sind ausreichend. Dadurch werden die Herstellungskosten für die entsprechenden Teile verringert, und sie sind auch in Massenproduktion bei kürzeren Vorlaufzeiten herstellbar.

Der erfindungsgemäße Flugkörper kann darüber hinaus auch Sensoren zur Erfassung von physikalischen oder chemischen Meßwerten sowie von Bildinformation sowie mindestens eine Einrichtung zum Senden der erfaßten Daten umfassen. Beispiele sind Sensoren zur Erfassung von Wetterdaten, Sensoren zur chemischen Untersuchung der Umgebungsluft, bildgebende Sensoren oder Vorrichtungen zur spektroskopischen Untersuchung der Atmosphäre. Beispielsweise kann ein Flugkörper, der in einer Höhe von ca. 100 bis 300 m positioniert ist, mit einer Kamera zur Aufnahme von Bildern bestückt sein, die dann die aufgenommenen Bilder an einen Empfänger sendet.

Insbesondere kann der erfindungsgemäße Flugkörper bei geeigneter Positionierung innerhalb der Stratosphäre zur Untersuchung der Ozonschicht herangezogen werden.

Der erfindungsgemäße Flugkörper ist dafür ausgelegt, daß er in einer Höhe bis in die Stratosphäre, vorzugsweise in einer Höhe von 25 bis 50 km ortsfest positioniert wird. In einer derartig hohen Höhe existiert eine stabile Luftschichtung, so daß die in den unteren Luftschichten üblichen Turbulenzen weitgehend vermieden sind. Er ist aber auch in anderen Höhen positionierbar. Beispielsweise kann er je nach Verwendungszweck auch in einer Höhe von ca. 100 bis 300 m positioniert werden.

Die vorliegende Erfindung wird im folgenden unter Bezugnahme auf die begleitende Figur konkreter beschrieben.

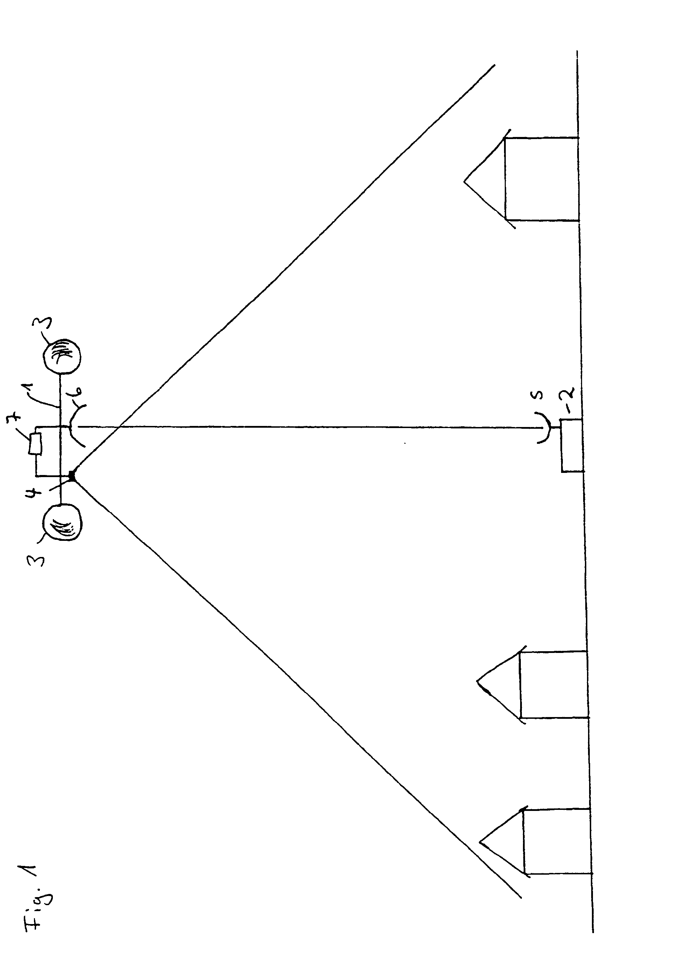

In Fig. 1 bezeichnet Bezugszeichen 1 einen Flugkörper mit zwei Auftriebskörpern 3, Bezugszeichen 2 bezeichnet eine Versorgungsstation mit einer Sendestation 5, die die zu übertragenden Daten an die auf dem Flugkörper angebrachte Sende- und Empfangsvorrichtung sendet und die für die Energieversorgung des Flugkörpers notwendige Energie liefert. Natürlich können aber die Sende- und Empfangsstation zur Datenübertragung und die Sende- und Empfangsstation zur Energieversorgung voneinander räumlich innerhalb der Versorgungsstation getrennt sein. Außerdem kann auch an anderer Stelle noch eine zusätzliche Sendestation zum Übertragen von Informationen an die Sende- und Empfangsstation, die auf dem Flugkörper angebracht ist, vorgesehen sein. Der Flugkörper befindet sich in einer Höhe von ca. 25 km vom Erdboden entfernt.

Die von der auf dem Flugkörper angebrachten Empfangsvorrichtung 6 empfangenen Signale werden vor der Aussendung gegebenenfalls in einer Verarbeitungseinrichtung 7 verarbeitet und/oder gespeichert und über eine Sendeeinrichtung 4 wieder abgestrahlt. Dabei ist die Form der zu verwendenden Sendeeinrichtung entsprechend der zu erzielenden Abstrahlungscharakteristik, die insbesondere von der Größe und Form des Versorgungsgebiets abhängt, ausgelegt. Beispielsweise ist ein λ/4-Dipol mit einer entsprechenden Rundstrahlcharakteristik, die eine Aussendung der Signale in Richtung Erde, nicht aber in Richtung Weltraum ermöglicht, bevorzugt.

Die von dem Energiesender 5 ausgestrahlte elektromagnetische Strahlung wird von der auf dem Flugkörper 1 angebrachten Empfangseinrichtung zu elektrischer Energie umgewandelt, die die nötige Versorgungsenergie darstellt und/oder die an Bord befindliche Versorgungsenergie ergänzt.

Alternativ kann sich gemäß der vorliegenden Erfindung der Flugkörper auch autonom unter Verwendung von Solarzellen mit Energie versorgen und nur in Sonderfällen, wenn der flugkörperinterne Energiespeicher fast aufgebraucht ist, von der Versorgungsstation zusätzliche Energie zur Ergänzung seiner Energiereserven beziehen.

In diesem Fall kann die Feinpositionierung des Flugkörpers unter Verwendung eines von einer Versorgungsstation oder einer Senderstation ausgesandten Informationsstrahls erfolgen.

## Patentansprüche

1. Flugkörper zum im wesentlichen ortsfesten Aufenthalt bis in die Stratosphäre, mit
Einrichtungen (3), die geeignet sind, den Flugkörper unter Ausnutzung des aerostatischen Auftriebs auf einer vorgegebenen Höhe zu halten, die Auftriebskörper aufweisen, die sich entfalten, sobald die vorgegebene Höhe erreicht ist;
Einrichtungen, die geeignet sind, den Flugkörper auf einer vorgegebenen Längen- und Breitenposition zu halten; und
Mitteln (6), um den Flugkörper von einer Versorgungsstation (2) aus drahtlos mit Energie zu versorgen.

2. Flugkörper nach Anspruch 1, bei dem die drahtlose Energieversorgung mittels elektromagnetischer Wellen erfolgt.

3. Flugkörper nach Anspruch 2, bei dem die Mittel zur drahtlosen Energieversorgung eine an der Versorgungsstation (2) angebrachte Laserlichtquelle und eine an dem Flugkörper angebrachte photoelektrische Umwandlungsvorrichtung umfassen.

4. Flugkörper nach Anspruch 2, bei dem die Mittel zur drahtlosen Energieversorgung eine an der Versorgungsstation (2) angebrachte Hochfrequenz-Sendeeinrichtung (5), Einrichtungen zum Einkoppeln von Hochfrequenz-Leistung aus der Hochfrequenz-Sendeeinrichtung sowie eine an dem Flugkörper angebrachte Hochfrequenz-Empfangseinrichtung (6) umfassen.

5. Flugkörper nach einem der vorhergehenden Ansprüche, femer mit einer Energievorratseinrichtung, die die Energie liefert, damit der Flugkörper von der Versorgungsstation auf die vorgegebene Höhe aufsteigt.

6. Flugkörper nach einem der vorhergehenden Ansprüche, bei dem die Einrichtungen, die geeignet sind, den Flugkörper auf einer vorgegebenen Höhe zu halten, einen oder mehrere Auftriebskörper umfassen.

7. Flugkörper nach einem der vorhergehenden Ansprüche, femer mit einem oder mehreren aerodynamischen Flügeln.

8. Flugkörper nach einem der vorhergehenden Ansprüche, bei dem die Einrichtungen, die geeignet sind, den Flugkörper auf einer vorgegebenen Längen- und Breitenposition zu halten, eine Vorrichtung zum Bestimmen der aktuellen Längen- und Breitenposition sowie eine Vorrichtung zum Korrigieren der aktuellen Längen- und Breitenposition umfassen.

9. Flugkörper nach Anspruch 9, bei dem die Vorrichtung zum Bestimmen der aktuellen Längen- und Breitenposition ein GPS-System umfasst.

10. Flugkörper nach Anspruch 8 oder 9, femer mit einer Vorrichtung zur Feinbestimmung der aktuellen Längen- und Breitenposition, die eine Einrichtung umfasst, die geeignet ist zu bestimmen, ob der Flugkörper den Ort der maximal übertragbaren Energie einnimmt.

11. Flugkörper nach einem der Ansprüche 8 bis 10,bei dem die Vorrichtung zum Korrigieren der aktuellen Längen- und Breitenposition einen Rückstoßantrieb und/oder einen aerodynamischen Antrieb umfasst.

12. Flugkörper nach einem der vorhergehenden Ansprüche, der als Ring ausgebildet ist und Mittel zum Ausführen einer Drehbewegung um die zentrale Ringachse umfasst.

13. Flugkörper nach einem der vorhergehenden Ansprüche, femer mit einem Mechanismus, der geeignet ist, einen autonomen Start- und/oder Landevorgang des Flugkörpers einzuleiten und/oder zu bewirken.

14. Flugkörper nach einem der vorhergehenden Ansprüche, femer mit einem oder mehreren Sensoren zur Erfassung von physikalischen und/oder chemischen Messwerten sowie von Bildinformation.

15. Mobile Informationsübertragungsstation mit einem Flugkörper nach einem der Ansprüche 1 bis 13, der mindestens eine Sende- und mindestens eine Empfangseinrichtung enthält.

16. Mobile Datenerfassungs- und -übertragungsstation mit einem Flugkörper nach Anspruch 14 und mindestens einer Einrichtung zum Senden der erfassten Daten.

17. Informationsübertragungssystem mit einer mobilen Informationsübertragungsstation nach Anspruch 15 und einer Versorgungsstation.

18. Datenerfassungs- und -übertragungssystem mit einer mobilen Datenerfassungs- und -übertragungsstation nach Anspruch 16 und einer Versorgungsstation.

## Revendications

1. Corps volant destiné à être maintenu sensiblement stationnaire jusque dans la stratosphère, avec
des dispositifs (3) à même de maintenir le corps volant à l'aide de la poussée aérostatique à une altitude prédéterminée, qui présentent des corps de poussée qui se déploient dès que l'altitude prédéterminée a été atteinte ;
des dispositifs à même de maintenir le corps volant en une position de longitude et de latitude prédéterminée ; et
des moyens (6) destinés à alimenter sans fil le corps volant en énergie depuis une station d'alimentation (2).

2. Corps volant selon la revendication 1, dans lequel l'alimentation en énergie sans fil a lieu au moyen d'ondes électromagnétiques.

3. Corps volant selon la revendication 2, dans lequel les moyens destinés à l'alimentation en énergie sans fil comprennent une source de lumière laser placée à la station d'alimentation (2) et un dispositif de conversion photoélectrique placé sur le corps volant.

4. Corps volant selon la revendication 2, dans lequel les moyens destinés à l'alimentation en énergie sans fil comprennent un dispositif d'émission à haute fréquence (5) placé à la station d'alimentation (2), des dispositifs destinés à découpler la puissance de haute fréquence du dispositif d'émission à haute fréquence ainsi qu'un dispositif de réception à haute fréquence (6) placé sur le corps volant.

5. Corps volant selon l'une des revendications précédentes, avec, par ailleurs, un dispositif de réserve d'énergie qui fournit l'énergie pour que le corps volant monte de la station d'alimentation à l'altitude prédéterminée.

6. Corps volant selon l'une des revendications précédentes, dans lequel les dispositifs à même de maintenir le corps volant à une altitude prédéterminée comportent un ou plusieurs corps de poussée.

7. Corps volant selon l'une des revendications précédentes, avec, par ailleurs, une ou plusieurs ailes aérodynamiques.

8. Corps volant selon l'une des revendications précédentes, dans lequel les dispositifs à même de maintenir le corps volant en une position de longitude et de latitude prédéterminée comprennent un dispositif destiné à déterminer la position de longitude et de latitude actuelle ainsi qu'un dispositif destiné à corriger la position de longitude et de latitude actuelle.

9. Corps volant selon la revendication 9, dans lequel le dispositif destiné à déterminer la position de longitude et de latitude actuelle comporte un système GPS.

10. Corps volant selon la revendication 5 ou 9, avec, par ailleurs, un dispositif destiné à la détermination fine de la position de longitude et de latitude actuelle et comportant un dispositif à même de déterminer si le corps volant adopte l'emplacement de l'énergie maximale pouvant être transmise.

11. Corps volant selon l'une des revendications 8 à 10, dans lequel le dispositif destiné à corriger la position de longitude et de latitude actuelle comporte une propulsion par réaction et/ou un entraînement aérodynamique.

12. Corps volant selon l'une des revendications précédentes, réalisé sous forme d'anneau et comportant des moyens pour effectuer un mouvement de rotation autour de l'axe d'anneau central.

13. Corps volant selon l'une des revendications précédentes, avec, par ailleurs, un mécanisme à même d'amorcer et/ ou de provoquer une opération de démarrage et/ou d'atterrissage autonome du corps volant.

14. Corps volant selon l'une des revendications précédentes, avec, par ailleurs, un ou plusieurs capteurs destinés à capter des valeurs de mesure physiques et/ou chimiques ainsi que des informations en images.

15. Station de transmission d'informations mobile, avec un corps volant selon l'une des revendications 1 à 13, contenant au moins un dispositif d'émission et au moins un dispositif de réception.

16. Station de détection et de transmission de données mobile, avec un corps volant selon la revendication 14 et au moins un dispositif destiné à émettre les données captées.

17. Système de transmission d'informations, avec une station de transmission d'informations mobile selon la revendication 15 et une station d'alimentation.

18. Système de détection et de transmission de données, avec une station de détection et de transmission de données mobile selon la revendication 16 et une station d'alimentation.

## Claims

1. A flying object for a substantially stationary stay up to the stratosphere, comprising:
means (3) suitable for keeping the flying object at a predetermined altitude utilizing aerostatic lift, comprising lift bodies which unfold as soon as the predetermined altitude is reached;
means suitable for keeping the flying object at a predetermined longitudinal and latitudinal position; and
means (6) for wirelessly supplying the flying object with energy from a supply station (2).

2. The flying object according to claim 1, wherein the wireless energy supply takes place by means of electromagnetic waves.

3. The flying object according to claim 2, wherein the means for a wireless energy supply include a laser light source attached to the supply station (2) and a photoelectric converting means attached to the flying object.

4. The flying object according to claim 2, wherein the means for a wireless energy supply include high-frequency transmitting means (5) attached to the supply station (2), means for coupling in high-frequency power from the high-frequency transmitting means and high-frequency receiving means (6) attached to the flying object.

5. The flying object according to one of the preceding claims, further comprising energy-storing means providing the energy required for the flying object to ascend from the supply station to the predetermined altitude.

6. The flying object according to one of the preceding claims, wherein the means suitable for keeping the flying object at a predetermined altitude include one or several lift bodies.

7. The flying object according to one of the preceding claims, further comprising one or several aerodynamic wings.

8. The flying object according to one of the preceding claims, wherein the means suitable for keeping the flying object at a predetermined longitudinal and latitudinal position include a device for determining the current longitudinal and latitudinal position and a device for correcting the current longitudinal and latitudinal position.

9. The flying object according to claim 8, wherein the device for determining the current longitudinal and latitudinal position includes a GPS system.

10. The flying object according to claim 8 or 9, further comprising a device for accurately determining the current longitudinal and latitudinal position including means suitable for determining whether the flying object is in the position of the maximally transmittable energy.

11. The flying object according to one of claims 8 to 10, wherein the device for correcting the current longitudinal and latitudinal position includes a repulsive propulsion and/or an aerodynamic propulsion.

12. The flying object according to one of the preceding claims, formed as a ring and including means for performing a rotational motion around the central ring axis.

13. The flying object according to one of the preceding claims, further comprising a mechanism suitable for initializing and/or causing an autonomous takeoff and/or landing process of the flying object.

14. The flying object according to one of the preceding claims, further comprising one or several sensors for detecting physical and/or chemical measuring values as well as picture information.

15. A mobile information-transmitting station comprising a flying object according to one of claims 1 to 13 including at least one transmitting and at least one receiving means.

16. A mobile data-detecting and transmitting station comprising a flying object according to claim 14 and at least one means for transmitting the data detected.

17. An information-transmitting system comprising a mobile information-transmitting station according to claim 15 and a supply station.

18. A data-detecting and transmitting system comprising a mobile data-detecting and transmitting station according to claim 16 and a supply station.
